Europäisches Patentamt

European Patent Office

Office européen des brevets

(19)

(11) Veröffentlichungsnummer: **0 126 867**
**B1**

(12) **EUROPÄISCHE PATENTSCHRIFT**

(45) Veröffentlichungstag der Patentschrift: **11.07.90**

(51) Int. Cl.⁵: **G 01 D 18/00**

(21) Anmeldenummer: **84102470.6**

(22) Anmeldetag: **08.03.84**

(54) **Vorrichtung zur Nullpunkteinstellung von Signalquellen, insbesondere Geberanordnungen.**

(30) Priorität: **02.04.83 DE 3312027**

(43) Veröffentlichungstag der Anmeldung:
**05.12.84 Patentblatt 84/49**

(45) Bekanntmachung des Hinweises auf die
Patenterteilung:
**11.07.90 Patentblatt 90/28**

(84) Benannte Vertragsstaaten:
**DE FR GB IT**

(56) Entgegenhaltungen:
**DE-A-2 841 583**
**DE-A-3 206 192**
**FR-A-2 394 208**
**GB-A-2 009 545**
**US-A-4 263 555**

(73) Patentinhaber: **ROBERT BOSCH GMBH**
**Postfach 50**
**D-7000 Stuttgart 1 (DE)**
(73) Patentinhaber: **PIERBURG GmbH & Co. KG**
**Alfred-Pierburg-Strasse 1**
**D-4040 Neuss 1 (DE)**

(72) Erfinder: **Gilz, Günter**
**An der Sandkaule 3**
**D-4052 Korschenbroich 3 (DE)**
Erfinder: **Henning, Manfred**
**Lange Hecke 12**
**D-4044 Kaurst (DE)**

(74) Vertreter: **Müller, Georg et al**
**ZGE1 Robert-Bosch-Platz 1**
**D-7016 Gerlingen-Schillerhöhe (DE)**

Courier Press, Leamington Spa, England.

## Beschreibung

Die Erfindung betrifft Vorrichtungen zur Nullpunkt-einstellung von Signalquellen, insbesondere Geberanordnungen. Bei bekannten Geberanordnungen, z.B. Winkel- und Weg-Gebern, muß der Nullpunkt justiert werden, d.h., ist eine definierte Nullpunktsituation gegeben, dann muß der Geber ein bestimmtes Ausgangssignal aufweisen. Diese Justierung und Einstellung eines bestimmten Signals bringen zum einen erhebliche Kosten, insbesondere in der Massenfertigung mit sich. Darüber hinaus ist die Genauigkeit der Justierung ein ständiges Problem.

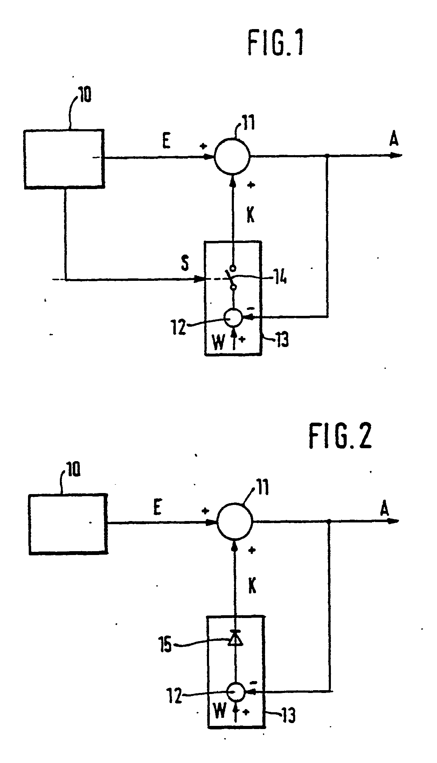

Aus der DE-OS 28 41 583 ist ein Verfahren zur automatischen Kontrolle von Meßumformern bekannt. Dort folgt nach Figur 1 einem Meßwertgeber G der Eingang E eines Meßumformers MU. Dessen Ausgang A ist über ein Korrekturglied KG ebenfalls mit dem Eingang E des Meßumformers MU verbunden. Ein am Ausgang A angeschlossener Meßwertänderungsdiskriminator DI steuert letztlich das Korrekturglied KG zur Einstellung des Ausgangssignals des Meßwertumformers auf einen bestimmten Wert.

Nach Figur 2 der DE-OS '583 folgt dem Meßumformer MU das Korrekturglied KG und einem sich anschließenden Summierungseingang S werden die Ausgangssignale von Meßwertumformer und Korrekturglied zugeführt.

Es hat sich gezeigt, daß die bekannten Schaltungsanordnungen hinsichtlich ihres Aufwandes für eine Großserienfertigung nicht zweckmäßig sind. Aufgabe der Erfindung ist deshalb die Schaffung einer Vorrichtung zur Nullpunkteinstellung von Signalquellen, die einfach in ihrem Aufbau und möglichst optimal in ihrer Wirkung ist. Gelöst wird diese Aufgabe mit Vorrichtungen nach den beiden unabhängigen Patentansprüchen. Sie zeichnen sich durch einfachen Aufbau und eine hohe Genauigkeit aus.

## Zeichnung

Zwei Ausführungsbeispiele der Erfindung sind in der Zeichnung dargestellt und in der nachfolgenden Beschreibung näher erläutert. Es zeigen Figur 1 ein erstes Ausführungsbeispiel mit vorhandenem Nullpunktsignal und Figur 2 ein zweites Ausführungsbeispiel ohne Nullpunktsignal.

## Beschreibung der Ausfuhrungsbeispiele

In dem in Figur 1 dargestellten ersten Ausführungsbeispiel erzeugt eine Geberanordnung 10 ausgangsseitig ein Signal E, das einer Korrektur-Additionsstufe 11 zugeführt wird. Das Ausgangssignal A der Korrektur-Additionsstufe bildet zum einen das korrigierte Ausgangssignal der Geberanordnung 10 und wird weiterhin einer Vergleichsstelle 12 einer Regelanordnung 13 zugeführt. Dieser Vergleichsstelle 12 ist weiterhin als Nullpunkt-Sollwertsignal ein Signal W zugeführt. DerAusgang der Vergleichsstelle 12 liefert ein Korrektursignal K, das über einen Schalter 14 der Korrektur-Additionsstufe 11 zugeführt wird. Der Schalter 14 wird bei Auftreten eines Nullpunktsignals S geschlossen.

Die Wirkungsweise der in Figur 1 dargestellten Schaltungsanordnung besteht im wesentlichen darin, daß die Geberanordnung 10 ein Nullpunktsignal S erzeugt, wenn die Nullpunktsituation gegeben ist. Durch dieses Nullpunktsignal S wird der Schalter 14 geschlossen und damit der Regelkreis 11, 13 wirksam geschaltet. Durch diesen Regelkreis wird das Ausgangssignal A auf den Wert W eingeregelt. Dieser Wert W kann im einfachsten Fall der Wert Null sein, er kann jedoch auf beliebige andere Werte eingestellt werden. Das durch die Regelanordnung 13 erzeugte Korrektursignal K wird in der Korrektur-Additionsstufe 11 mit dem Ausgangssignal E der Geberanordnung 10 addiert. Entspricht das Ausgangssignal A dem einstellbaren Wert W, so wird das Korrektursignal K gleich Null. Bei Öffnen des Schalters 14 behält das Signal K den letzten Wert vor Öffnen des Schalters.

Das in Figur 2 dargestellte zweite Ausführungsbeispiel entspricht weitgehend dem ersten Ausführungsbeispiel. Entsprechende Baugruppen sind mit entsprechenden Bezugszeichen versehen. Das zweite Ausführungsbeispiel ist für den Fall gedacht, daß die Geberanordnung 10 kein Nullpunktsignal erzeugt. In diesem Falle erfolgt die Definition der Nullpunktsituation dadurch, daß das Ausgangssignal A den einstellbaren Wert W unterschreitet. Durch die anstelle des Schalters 14 nunmehr in den Regelkreis geschaltete Diode 15 wird gewährleistet, daß nur positive Korrektursignale K zur Korrektur-Additionsstufe 11 gelangen können. Ein positives Korrektursignal liegt jedoch nur in der Nullpunktsituation vor, d.h., wenn das Signal A den Wert des Signals W unterschreitet. In diesem Falle wird das Signal A wiederum auf den Wert W eingeregelt. Wenn A größer als W ist, so liegt keine Nullpunktsituation vor und durch Sperrung der Diode 15 wird kein Korrektursignal K erzeugt. Bei Sperren der Diode 15 behält K den größten bis dahin aufgetretenen Maximalwert. K muß beim Initialisieren des Systems auf einen definierten Wert gesetzt werden und kann sich nur in positiver Richtung ändern.

## Patentansprüche

1. Vorrichtung zur Nullpunkteinstellung eines analogen Meßsignals von Geberanordnungen, mit einem Regelkreis mit Soll-Ist-Vergleich sowie einer Korrekturmöglichkeit für das Signalquellenausgangssignal (E) zur Abgabe eines weiter verarbeitbaren Ausgangssignals (A), dadurch gekennzeichnet, daß zur automatischen Nullpunkteinstellung das Ausgangssignal (A) bei vorliegender Nullpunktsituation über eine Korrektur-Additionsstufe (11) auf einen einstellbaren analogen Wert (W) geregelt wird und zur Erkennung der Nullpunktsituation ausgehend von der Geberanordnung ein Nullpunktsignal (S) erzeugbar ist, das den Regelkreis wirksam schaltet.

2. Vorrichtung zur Nullpunkteinstellung eines analogen Meßsignals von Geberanordnungen, mit einem Regelkreis mit Soll-Ist-Vergleich sowie einer Korrekturmöglichkeit für das Signalquellenausgangssignal (E) zur Abgabe eines weiter verarbeitbaren Ausgangssignals (A), dadurch gekennzeichnet, daß zur automatischen Nullpunkteinstellung das Ausgangssignal (A) bei vorliegender Nullpunktsituation über eine Korrektur-Additionsstufe (11) auf einen einstellbaren analogen Wert (W) geregelt wird, wobei das Differenzsignal zwischen Ausgangssignal (A) und einstellbarem Wert (W) zur Erkennung ser Nullpunkt situation über eine Diode (15) das Signalquellenausgangssignal (E) beeinflußt.

**Revendications**

1. Dispositif pour le réglage du point zéro d'un signal de mesure analogique en provenance de dispositifs émetteurs, dispositif comportant un circuit de réglage, une comparaison de valeur de consigne et de valeur réelle, ainsi qu'une possibilité de correction pour le signal de sortie (E) des sources de signaux pour fournir un autre signal de sortie (A) susceptible d'un complément de traitement, dispositif caractérisé en ce que pour le réglage automatique du point zéro, le signal de sortie (A), lorsqu'il existe une situation de point zéro, est réglé par l'intermédiaire d'un étage totalisateur d'addition (11) à une valeur analogique (W) réglable, tandis que pour la détection de la situation de point zéro, un signal de point zéro (S) est susceptible d'être engendré en partant du dispositif émetteur, ce signal commutant, de façon efficace, le circuit de réglage.

2. Dispositif pour le réglage du point zéro d'un signal de mesure analogique en provenance de dispositifs émetteurs, dispositif comportant un circuit de réglage, une comparaison de valeur de consigne et de valeur réelle, ainsi qu'une possibilité de correction pour le signal de sortie (E) des sources de signaux, pour fournir un signal de sortie (A) susceptible de recevoir un traitement complémentaire, dispositif caractérisé en ce que pour le réglage automatique du point zéro, le signal de sortie (A), lorsqu'il existe une situation de point zéro, est réglé par l'intermédiaire d'un étage totalisateur de correction (11) sur une valeur analogique réglable (W), le signal différenciel entre le signal de sortie (A) et la valeur réglable (W) influençant, pour la détection de la situation de point zéro, le signal de sortie (E) des sources de signaux par l'intermédiaire d'une diode (15).

**Claims**

1. Device for the zero-point setting of an analog measuring signal of sensor arrangements, having a control loop with set-actual comparison as well as a correction capability for the signal-source output signal (E) for emitting a further-processable output signal (A), characterized in that, for automatic zero-point setting, the output signal (A) is adjusted during the existence of a zero-point situation to a settable analog value (W) via a correction-addition stage (11) and, for detecting the zero-point situation on the basis of the sensor arrangement, a zero-point signal (S) can be generated which switches the control loop into action.

2. Device for the zero-point setting of an analog measuring signal of sensor arrangements, having a control loop with set-actual comparison as well as a correction capability for the signal-source output signal (E) for emitting a further-processable output signal (A) characterized in that, for automatic zero-point setting, the output signal (A) is adjusted during the existence of a zero-point situation to a settable analog value (W) via a correction-addition stage (11), the difference signal between the output signal (A) and settable value (W) for detecting the zero-point situation influencing the signal-source output signal (E) via a diode (15).

# FIG.1

# FIG.2